# EUROPEAN PATENT SPECIFICATION

(11) **EP 2 490 554 B1**
(45) Date of publication and mention of the grant of the patent: **07.08.2013**
(21) Application number: 10770634.3
(22) Date of filing: 22.10.2010
(51) Int. Cl.: A23N 7/00, F28B 1/02, F28B 9/02, F28B 9/08, F28B 9/10, F28D 7/02

(54) **METHOD AND DEVICE FOR RECOVERING HEAT FROM INTERMITTENTLY AND BRIEFLY RELEASED BLOW-OFF STEAM CHARGES**
VERFAHREN UND VORRICHTUNG ZUR WÄRMERÜCKGEWINNUNG AUS INTERMITTIEREND UND KURZZEITIG ABGEBLASENEN DAMPFMENGEN
PROCÉDÉ ET DISPOSITIF POUR LA RÉCUPÉRATION DE CHALEUR D'UNE QUANTITÉ DE VAPEUR PENDANT UNE LIBERATION INTERMITTENT ET BREF

(30) Priority: 23.10.2009 NL 2003700
(43) Date of publication of application: 29.08.2012
(73) Proprietor: Doomernik Consulting Engineers B.V., 5831 PE Boxmeer (NL)
(72) Inventor: DOOMERNIK, Cornelis, NL-5831 PE Boxmeer (NL)
(74) Representative: Nederlandsch Octrooibureau
(86) International application number: PCT/NL2010/050703
(87) International publication number: WO 2011/049452

(56) References cited:
- DE-C1- 4 206 020
- JP-A- 60 205 184
- NL-C2- 1 029 843
- US-A- 949 217
- US-A- 1 947 863
- US-A- 4 749 030
- US-A- 5 942 271

## Description

The invention relates to a method for recovering heat from blow-off steam, wherein the method is carried out using a container with an internal volume, provided with an inlet and an outlet.

The invention also relates to a device for recovering heat from blow-off steam.

The intermittent and brief release of blow-off steam occurs with a steam-peeling device. The steam-peeling device can be used for peeling crops, in particular for peeling tuberous crops, such as for example potatoes. To this end, an amount of steam at a pressure of 15-17 bars is introduced into a container containing the crops to be peeled. For a period of 20 to 25 seconds, the crops are subjected to the steam. Then the device is opened in order to allow the steam to escape and the pressure is taken off the device. As a result thereof, the skin comes off the tuberous crop and will partly be carried along with the steam, thus achieving the desired peeling effect. The steam is released for approximately 2 to 3 seconds. The total cycle time is approximately 60-70 seconds.

A method and device for recovering heat from this intermittently and briefly released blow-off steam are known. The known device makes use of a vessel which is provided at the bottom with an inlet for steam. The vessel is provided with a condenser, such as for example a system of ceramic or stainless steel packed beds. In addition, the vessel is provided with a water circuit, in which water flows over the condenser from an upper side of the vessel. On a lower side of the vessel, the water is collected and reintroduced to an upper side of the vessel via a heat exchanger which is situated outside the vessel.

Passing the steam through beds ensures that the steam transfers its heat to the beds, as a result of which the heat is stored in the buffer stack. By then passing water via the condenser, it is possible to recover heat. The heat exchanger transfers the heat absorbed by the water to another liquid, depending on the requirements. A method and device according to the preamble of claims 1 and 5 is disclosed by JP-A-60205184.

It is a drawback of the known method and device that the buffer material is soiled relatively quickly as a result of, for example, peelings, and is also relatively difficult to clean. Due to the fact that the peelings of the various tuberous crops are partly carried along with the steam, they will also end up in the heat-recovery device. Here, they will be deposited on the condenser, and possibly also in the heat exchanger. In addition, the recirculated water in the water circuit is soiled. Cleaning such a device takes a lot of time, as a result of which the device cannot be used for extended periods of time.

It is therefore an object of the invention to provide a method and a device by means of which at least one of said problems of the known device is at least partly solved or alleviated.

To this end, the invention provides a method for recovering heat from intermittently and instantaneously released blow-off steam charges, wherein the method is carried out using a container with an internal volume, provided with an inlet and an outlet, wherein the method comprises the following steps:
- supplying to the container via the inlet and collecting in the internal volume of the container a blow-off steam charge, wherein the charge is held in a gravitational field;
- recovering energy from a portion of the blow-off steam charge by condensation thereof, wherein condensation results in a stream from said portion to an outlet which is at a lower gravitational potential;
- discharging a portion of the charge from the internal volume of the container via the outlet at a lower gravitational potential by supplying a subsequent blow-off steam charge to the internal volume and thus expelling the charge which is present via the outlet;
- drawing in air via the outlet during heat recovery.

The method is carried out using a container with an internal volume. The container may be an open container. An inlet is connected to the internal volume for supplying the charge to said internal volume. Also, an outlet is provided via which a portion of the charge of steam during the condensation is replaced by air. The blow-off steam charge is collected inside the container and is thus brought into a gravitational field.

The method according to the present invention comprises recovering energy in the container and in particular heat from at least a portion of the blow-off steam charge. The terms energy recovery and heat recovery will be used interchangeably in this application. Heat exchange may take place. As a result of the heat exchange, at least a portion of the steam charge can condense as well. The energy which is released during condensation c an be collected in another medium by means of heat exchange. In another embodiment energy is recovered according to the method from the fact that the condensation of the steam charge is used to heat another medium, for example recirculated water.

The method according to the present invention comprises the step of recovering energy from a portion of the blow-off steam charge at a location which is at a higher gravitational potential with respect to the outlet. The outlet is situated lower than the location where energy recovery takes place. The inlet for replacement air may also be at a lower location. In the present invention, the term gravitational potential is intended to mean the amount of energy which is present in the blow-off steam charge due to the location of the object in the gravitational field. It is a measure for the potential energy of portions of the charge as a result of the gravitational field. Heat exchange results in the blow-off steam charge cooling down and/or condensing, as a result of which the density increases and/or the steam passes to the liquid phase, and thus drops to the lower potential. This results in a stream in the direction of the outlet at the lower potential. Recovering heat from a portion of the steam charge ensures that said portion either becomes liquid (transition to liquid phase) or attains a higher density, as a result of which a downward stream will take place in the direction of the outlet. In this way, a self-separating capacity is created in the container. The portion of the charge from which heat is recovered will flow away from the location where heat recovery takes place and is replaced by a portion of the charge from which no or less heat has been recovered. It is also possible for air to be drawn into the container due to the significant change in volume of the steam when it passes to a liquid phase. The portion of the charge from which heat has been recovered, will be referred to below as 'fluid', as it may be a combination of liquid and gas.

The method according to the present invention furthermore comprises the step of discharging the fluids present in the internal volume of the container via the outlet at a lower gravitational potential. Both gas and liquid, remainders of the supplied charge, are passed via a lower potential in order to leave the internal volume. According to the method, a new charge of steam is supplied. The supply of the new charge results in the gasses present in the internal volume being displaced. Due to the above-described self-separating capacity, the fluids from which the least heat can be recovered/the most heat has already been recovered, are at the lower gravitational potential and thus nearer the outlet. Precisely this portion will be discharged first by displacement. In this way, a kind of first-in-first-out system is obtained in which a steam charge is introduced, self-separation takes place where colder portions/condensed portions move to the lower potential, and where the supply of a new charge results in the displacement of the volume which is present with said colder portions leaving the internal volume via the outlet first.

The method according to the present invention makes it possible to recover heat in a relatively continuous manner from an intermittently and instantaneously released blow-off steam charge. The batchwise process of releasing the blow-off steam charges is thus turned into a relatively continuous process. As a result thereof, it is now possible to recover heat from the blow-off steam charge in a more efficient manner.

The method according to the present invention comprises the step of drawing in air via the outlet while recovering heat. In this case, the outlet allows gas/air to be drawn into the internal volume. During heat recovery and in particular during the condensation of the steam charge, a volume reduction takes place which is compensated for by drawing in air via the outlet. This also results in cold air, in particular outside air, being sucked in via an open connection of the outlet. Due to the fact that the steam is at a higher gravitational potential due to the lower density, there is very little, if any, heat exchange with the supplied cold air and the self-induced separation remains in force.

The outlet is in particular an open outlet, in particular a pipe or flue, the opening of which is at a lower potential than where heat recovery takes place, and in which said opening is placed preferably in the centre of the volume. In an embodiment, an open container is used, for example a hat-like container. A large portion of a bottom side may be open. Steam remains trapped under the hat.

In an embodiment of the method, it is furthermore advantageous to provide an internal volume above the entrance to the outlet, i.e. at a higher potential than the outlet, which volume is greater than the volume of the supplied blow-off steam charge. When the charge is supplied, the old charge/fluid which is present will be displaced in the direction of the outlet and be forced out. The new charge, hot and therefore having a low density, forms a kind of pusher or sucker which forces the colder fluid out via the outlet. As the internal volume above the outlet is greater than the volume of the supplied charge, the supplied charge will not reach the outlet, thus making it possible to effect a complete heat exchange. The container thus forms a buffer which makes it possible to recover heat for a relatively long time from a blow-off steam charge which was instantaneously introduced into the container. The method according to the invention thus comprises buffering the blow-off steam charge in the internal volume. This is a further step in rendering the batch process continuous.

In an embodiment of the method, the volume of the supplied blow-off steam charge is between 70% and 90% of the internal volume of the container. The container is overdimensioned, as it were, and comprises a larger internal volume than the volume of the supplied charge. In this way, no portion of the supplied charge is wasted, and heat can be recovered in a relatively efficient manner. Due to the fact that the container is overdimensioned, it is possible to provide a buffer of blow-off steam in the container. Thus, heat can be recovered for a relatively long time from a blow-off steam charge which was introduced instantaneously into the container.

It is possible for the step of exchanging heat from the blow-off steam charge to at least partly coincide with the step of supplying the next blow-off steam charge. In this way, it is possible to continuously recover heat from the intermittently and instantaneously released blow-off steam charges. Thus, there will be no periods during which no heat can be recovered.

It is possible for the step of recovering heat from the blow-off steam to comprise bringing the blow-off steam into contact with a heat exchanger provided in the container. The heat exchanger may be provided with a transportation medium, such as for example water. The water may have an inlet temperature of approximately 80°C, and an outlet temperature of approximately 95°C. However, other inlet temperatures are also conceivable. In particular, the outlet temperature is adapted to the condensation temperature of steam. It will be clear to the person skilled in the art that, depending on the demands he makes, the heat exchanger can be dimensioned in any desired way, so that a certain outlet temperature is achieved and/or inlet temperature can be used. It is also possible to use different flow rates for the transfer medium in the heat exchanger.

A steam/air layer may be formed in the container. The steam may be situated at the top side of the steam/air layer, while the air is at the bottom side of the steam/air layer. The density of air is greater than the density of steam. In this way, a two-layered system is formed in the container. The steam and air form a latent layer in the container. The steam is situated at the top side of the container. After the energy from the steam has been transferred, relatively cold air can collect in the bottom portion of the container, for example by being drawn in via the outlet or another entrance. The steam layer floats on the air layer, as it were. A portion of the steam may be brought into heat-exchanging contact with the heat exchanger.

In an embodiment, the steam/air layer is situated near the heat exchanger after the introduction of a blow-off steam charge. By exchanging heat, it is possible for steam to condense. This will result in a reduction in the steam layer and cause the boundary of the steam/air layer to move in the direction of the heat exchanger. It is advantageous if the boundary of the steam/air layer is always under (lower gravitational potential) the location of the energy recovery/heat exchange. This distance is smallest just before the step of supplying the next charge. Due to the fact that the boundary of the steam/air layer is still at a vertical distance from the heat exchanger, the heat exchanger will be in heat-exchanging contact with the steam, at the point in time when a new charge is supplied. In this way, heat can be recovered continuously from the intermittently and instantaneously released blow-off steam charges.

After the new charge has been supplied, the boundary of the steam/air layer is situated above the outlet. Consequently, steam will not leave the internal volume via the outlet immediately after having been supplied.

The height difference between the steam/air layer after the introduction and before the supply corresponds to a buffer volume of blow-off steam in the container. The buffer volume is used to bridge the periods when no steam charge is released, so that heat can be recovered in a relatively continuous manner. The buffer volume is partly dependent on the volume of blow-off steam charge, the time period during which heat can be recovered from the total volume of blow-off steam, and the time period between the release of two successive blow-off steam charges. Other variables, such as the efficiency of the heat exchanger and the dimensions of the container, may also affect the buffer volume.

In an embodiment of the method, the buffer volume is between 10 m³ and 30 m³.

It is possible for the heat recovery to take place in a heat-exchanging volume, wherein the heat-exchanging volume is between 10% and 30% of the volume of the blow-off steam charge, and wherein the remaining portion of the blow-off steam charge forms the buffer volume.

It is also possible that the step of supplying the next blow-off steam charge results in a boundary layer between the blow-off steam charge which is already present and the next blow-off steam charge, with the boundary layer being situated near the outlet of the container after the supply step. In this manner, a portion, preferably the largest portion, of the charge which is already present is forced out of the container. Another portion remains behind in the container. This latter portion is relatively cold and will collect at a lower gravitational potential, preferably near the outlet. Here, it forms a barrier between the newly supplied blow-off steam charge and the discharge thereof from the internal volume of the container. In this way, the relatively hot and newly supplied blow-off steam charge is kept in the container in an effective manner. The newly supplied blow-off steam charge cannot leave the container, or at least only with relatively great difficulty, as a result of which the energy losses are relatively small.

It is advantageous if the blow-off steam charge is supplied at a top side of the container. The blow-off steam can be discharged via a bottom side of the container. Such an embodiment of the method is relatively efficient. The relatively hot blow-off steam is supplied at a top side, in which case heat is recovered at a top side as well. Discharging via the bottom side ensures that the blow-off steam has to go via a lower gravitational potential. The outlet is also situated in a location to which the cooled-down blow-off steam tends to flow after it has undergone heat exchange. Consequently, the charges can hardly exchange heat with one another, as a result of which relatively little heat is lost.

In an embodiment, the supply of blow-off steam takes place during a first time period. Heat recovery from the blow-off steam takes place during a second time period. Preferably, the first time period is less than 5% of the second time period. Supplying the blow-off steam charge may, for example, last 2 to 3 seconds. The cycle time, i.e. the time between two consecutive blow-off steam charges, is approximately 60 to 70 seconds. Preferably, heat is recovered from the blow-off steam for a large part of the cycle time. In this way, the time which is available between two consecutive blow-off steam charges can be used efficiently to recover heat from the blow-off steam charge. By using a large part of the cycle time, it also becomes possible to achieve a relatively continuous heat recovery.

In an embodiment of the method, the blow-off steam is supplied to the vessel in a tangential direction. It is also possible to introduce the blow-off steam radially into the vessel. In this case, the container can have a round cross section. The radial introduction ensures that the blow-off steam is kept in that part of the container into which the blow-off steam is introduced. When the blow-off steam is introduced, for example into the top portion of the container, the blow-off steam will also stay in this top portion. This is particularly advantageous when a heat exchanger is provided in the top part of the container. In addition, the tangential introduction will ensure that the blow-off steam will be mixed relatively well in that part of the container into which the blow-off steam is introduced. This ensures that a heat exchanger which is provided in the container can recover heat from the steam relatively efficiently, since there are hardly any temperature gradients in that part of the container. In addition, the tangential introduction, if desired in combination with the radial introduction, ensures that the remaining portion of the blow-off steam charge which is already present is displaced in the direction of the outlet.

It is possible for the supplied blow-off steam to comprise solid particles. The solid particles may, for example, be peelings from the peeled tuberous crops, such as potato peelings. The peelings may come into contact with a heat exchanger provided in the container. The supplied charge may be directed at the heat exchanger.

The precipitation of solid particles on the heat exchanger may result in a reduced transfer of heat between the steam and the heat exchanger, as a result of which less heat can be recovered. An embodiment of the method comprises the further step of removing the solid particles precipitated in the container by means of a Cleaning-in-Place method. The Cleaning-in-Place method ensures that the device can be cleaned during operation without having to be taken out of service. As the blow-off steam charge is supplied in such a manner that it is directed at the heat exchanger and the charge has a considerable velocity, a blow-cleaning effect is achieved, as it were.

The Cleaning-in-Place method may comprise the step of supplying water to the heat-exchange element. Preferably, the water introduced into the container is pressurized. In this way, the pressure of the water will ensure that the solid particles stuck to the heat-exchange element come loose, and are carried along further into the container. Thus, the heat-exchange element remains clean.

In an embodiment, the solid particles are discharged from the container. This may be effected, for example, by providing an opening in the bottom of the container. The solid particles which have come loose will, together with the supplied water and under the force of gravity, be taken to a receptacle below the container, in particular the bottom of the container, and will leave the container there. The opening in the bottom of the container also ensures that water of condensation can leave the container in a simple manner. The opening may therefore also be suitable for other purposes than a Cleaning-in-Place method.

It is possible for the Cleaning-in-Place method to comprise the step of supplying a blow-off steam charge. The relatively high pressure and the relatively high atmospheric humidity may lead to the stuck particles coming loose and being carried along further in the container. Preferably, the steam is introduced in such a manner that a stream of the steam is directed at the heat-exchange element.

According to an aspect of the invention, a device is provided for recovering heat from intermittently and instantaneously released blow-off steam charges. The device may form part of an assembly for peeling tuberous products, such as potatoes, with the assembly furthermore comprising a steam bulb, wherein an outlet of the steam bulb is connected to an inlet of the device.

The device according to the invention comprises a container with an internal volume. The container may be a hat-like container. The container may be provided with an inlet for introducing blow-off steam into the container, with an outlet for discharging blow-off steam and with a heat-exchange element for recovering energy (heat and/or condensation energy) from the blow-off steam. In a position of use of the container, the heat-exchange element is above the outlet. The outlet may be configured to be open during the recovery of energy from the blow-off steam. In this way, it is possible to introduce air into the container via the outlet during heat recovery. Thus, the outlet is not only open when the blow-off steam charge is being discharged, but also during the heat-recovery phase. The fact that the outlet is open means that air can be drawn in and thus can be introduced into the container. The air which is drawn in forms a barrier between the steam charge and the discharge. Consequently, it is relatively difficult for the steam charge to leave the container. In addition, the air which is drawn in causes the steam to be kept above the outlet, so that the steam is brought into contact with the heat-exchange element.

By means of the device, it is possible to recover heat in a relatively continuous manner from an introduced blow-off steam charge. The blow-off steam will tend to gather in a specific part of the container. A relatively high position of the heat-exchange element compared to a low position of the outlet makes it possible for the relatively hot steam to be kept in the container for longer, since the hot steam tends to flow upwards. The fact that the outlet is open ensures that air can be drawn in. The air keeps the steam in the vicinity of the heat-exchange element and forms a barrier preventing steam from flowing out via the outlet. The relatively high position of the heat-exchange element also ensures that energy can be recovered from a blow-off steam charge for a long time. After the energy from the blow-off steam has been recovered, in particular by condensation, this portion will become relatively heavy due to this portion having a higher density than portions from which energy can still be recovered, and will therefore tend to move downwards. The portion from which energy has been recovered and which has largely condensed, will be referred to as fluid below. By positioning the outlet below the heat-exchange element, use is made of the fact that cooling down results in an increase in density. In a gravitational field, the heavier, cooled-down fluid will therefore sink/drop. The outlet is situated at a lower gravitational potential. After the heat recovery, the relatively heavy fluid will therefore flow in the direction of the outlet. In this way, a natural separation takes place within a blow-off steam charge. In addition, the device according to the invention ensures that the relatively cold blow-off steam forms a buffer for the relatively hot blow-off steam, so that the hot blow-off steam cannot flow out of the container.

Preferably, the heat exchanger is provided in the internal volume of the container. With the known device, a condenser is placed in the internal volume and a heat exchanger is placed outside the container. The condenser has to store as much heat as possible from the charge and a medium has to recover the heat from the condenser in order then to transport it to the heat exchanger, where the heat is transferred to another medium. Thus, multiple steps are required in order to recover the heat. In the embodiment according to the invention, the heat exchanger is situated in the internal volume of the container and the heat from the steam can be transferred directly to the medium. Heat recovery can thus be effected in only one step. This is partly made possible by the fact that the blow-off steam charge can stay in the container for a relatively long time. All in all, the losses are relatively small, as a result of which a highly efficient device for recovering heat is obtained.

Preferably, the internal volume comprises a buffer volume around the heat exchanger and a volume which is at least equal to the volume of the charge. Thus, when the next charge is introduced, at least a volume of the size of the buffer volume remains behind in the internal volume. The buffer volume around the heat exchanger is where the most energy-rich portion of the previous charge is situated and this remains behind and could still be used for energy recovery. The other portions of the previous charge are forced out.

In a preferred embodiment, the container comprises an entrance for supplying relatively cold air, for example outside air. Said entrance may be the outlet. The outlet may be an open connection to the outside air or a further device which is situated downstream. As a result of the energy recovery in the container, the volume of the steam will decrease. Cold air can be drawn in via the entrance/outlet. Preferably, the drawing-in takes place via the outlet, as a result of which a blanket of cold air is formed near said outlet, which blanket of cold air acts as a kind of valve which blocks the discharge of hot steam via the outlet.

In an embodiment, the heat-exchange element is a heat exchanger. Preferably, the inlet is placed near the heat-exchange element, so that the heat losses are relatively small. The inlet is preferably positioned higher than the outlet. Thus, fluid which leaves the container via the outlet will not come into contact with supplied steam which would result in a loss of energy.

Preferably, the inlet is provided in an upper part of the container. The relatively hot steam tends to flow upwards. By providing the inlet in an upper part, the steam will be introduced into the container at its final position, thus rendering the heat losses relatively small.

It is possible to provide the inlet tangentially to a wall of the container. In this way, a blow-off steam charge introduced into the container will be provided with a rotating stream. The rotation ensures that the blow-off steam charge is mixed well, as a result of which the temperature differences in the steam charge become relatively small.

It is possible for the container to be provided with a tube having a first and a second nozzle orifice. The first nozzle orifice is provided in the internal volume of the container. The second nozzle orifice is placed above the first nozzle orifice, and outside the internal volume of the container. The outlet is formed by the first nozzle orifice. The tube may, for example, be a pipe which extends upwards. The pipe is placed such that steam can only leave the device via a higher gravitational potential. This required bridging of the gravitational potential ensures that a natural barrier is formed for the steam to leave the device. Such an embodiment ensures that the blow-off steam present in the container has to move from the outlet upwards in order to leave the container. The blow-off steam present at the outlet is relatively heavy and tends to move downwards. Therefore, the blow-off steam can only leave the container if sufficient energy is supplied to the blow-off steam. This is possible, for example, by supplying a new blow-off steam charge. Supplying a new charge will displace the old charge and push it upwards from the outlet in the pipe. The tube will therefore cause a barrier to be formed near the outlet, which prevents the blow-off steam which is present in the container from flowing away.

Preferably, the outlet is placed at a vertical distance from a bottom of the container. Thus, a barrier volume is formed in the container. In order to leave the container, a blow-off steam charge which is present in the container first has to flow down and then flow up.

The volume of the portion of the internal volume of the container which is above the outlet may be greater than the volume of an amount of blow-off steam to be introduced into the device. This prevents steam from already being lost when a steam charge is being supplied.
Preferably, the upper volume is adjusted using the volume of the blow-off steam charge. Relatively large blow-off steam charges will require a larger volume. Preferably, the volume of the portion above the outlet is equal to 120 % of the volume of the blow-off steam charge.

The steam inlet may be provided with an air-distributing element in order to ensure that the blow-off steam flows evenly into the container. In this way, the blow-off steam can be introduced into the container in a controlled manner. In this case, relatively few pressure differences occur in the container itself, which benefits the service life of the device.

An embodiment of the present invention will be explained in more detail by means of a description of the figure. It should be clear to the person skilled in the art that the illustrated embodiment in no way limits the scope of protection which is defined in the claims. The invention is described with reference to a number of advantages. Each of these advantages may comprise a patentable invention. Implicit advantages of specific embodiments will also be obvious to the person skilled in the art. Each of the implicit advantages can also form a basis for a patentable invention according to the application or according to a divisional application. In the figures:
Fig. 1 shows a cross-sectional side view of a device according to an embodiment of the present invention;
Fig. 2 shows a cross-sectional top view of the device shown in Fig. 1;
Figs. 3a and 3b show a cross-sectional side view of an embodiment of the device just after the supply of a blow-off steam charge, and just before the supply of a blow-off steam charge.

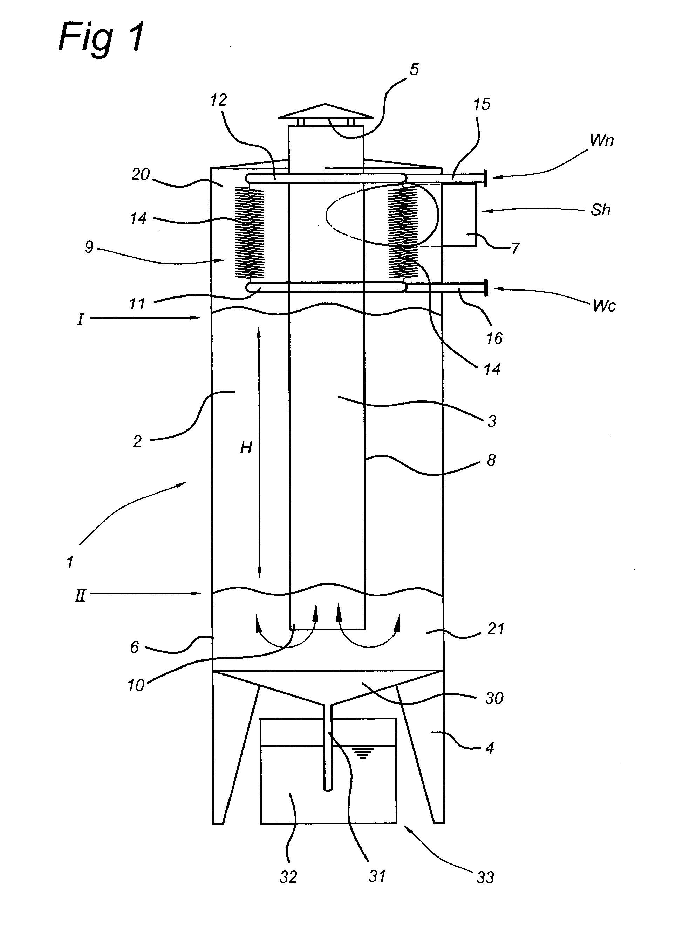

Fig. 1 shows a steam condenser 1. The steam condenser 1 comprises a vessel 6 with an internal volume. The vessel 6 is provided with an inlet 7 for supplying blow-off steam S_{H} to the vessel 6. The inlet 7 is placed near a top side of the vessel 6 and ends in a part of the vessel 20 in which a heat exchanger 9 is placed. The heat exchanger 9 comprises a supply line 16 for liquid and a discharge line 15 for liquid. The supply line 16 is connected to a number of tubular spirals 14, which are situated in the internal volume of the vessel 6. Furthermore, a tube 8 with an internal duct 3 is placed in the vessel 6. The duct forms a connection to an exit 5 which is provided on an upper side of the vessel 6. The central tube 8 with the duct 3 forms a discharge 10 for the vessel 6. The vessel 6 is placed on a frame 4. At a bottom side of the vessel 6, a cone-shaped bottom 30 with an opening 31 is provided. The opening ends in a receptacle 33 placed inside the frame 4 for collecting condensed water.

The operation of the steam condenser 1 illustrated in Fig. 1 is as follows. A batch of blow-off steam S_{H} is introduced into the vessel via the inlet 7. In this case, the blow-off steam may come from a potato-peeling machine or a steam bulb, although the invention is not limited thereto. In such a case, it is possible for a relatively large amount of blow-off steam to be released in a relatively short time, such as for example 2 to 3 seconds. The release may take place relatively batchwise, that is to say that in such a case, no continuous stream of blow-off steam is introduced into the vessel 6, but that the steam is supplied intermittently. If a potato-peeling machine is connected to the inlet, the period during which no steam is supplied may be approximately 60-70 seconds.

The supplied blow-off steam will flow into the vessel 6 and in this case take up a certain amount of the internal volume of the vessel 6. A bottom layer of the steam present in the vessel is indicated by line II. The steam has a relatively low density, also with respect to hot air, and will therefore gather at the top of the vessel 6. Preferably, the vessel 6 is dimensioned such that, after the amount of steam has entered, the bottom layer II of steam is just above the discharge 10 of the tube 8.

The blow-off steam introduced into the vessel will, at the top side of the vessel, come into contact with the heat exchanger 9. A relatively cold liquid is supplied in the supply line 16. Preferably, water is used. The water preferably has an inlet temperature of approximately 80°C. The cold water flows from the supply line 16 to the various spirals 14. In the spirals, the heat exchange between the relatively hot steam and the relatively cold liquid will take place. In particular, condensation of the steam will take place there.

In the process, the heat exchange medium/the liquid heats up. The liquid will flow further in the direction of the discharge line 15 of the heat exchanger 9. The water coming from the discharge line 15 may in this case have a temperature of approximately 95°C. The water may then be used for applications which require relatively hot water by connecting the discharge line 15 to another device, as desired. However, it is possible to choose other liquids for use in the heat exchanger. It is also possible to use other inlet temperatures for the cooling liquid, so that a different outlet temperature associated therewith is obtained. Other embodiments of the heat exchanger are also conceivable.

The steam will give off part of its heat to the relatively cold heat exchanger 9, so that the steam cools down and its density increases. In particular, the steam will give off its heat through condensation. Consequently, the cooled-down steam and in particular the condensate formed by condensation will move downwards/drop into the vessel. At the bottom of the vessel, the condensate and the relatively cold steam will collect. Due to the phase change from steam to condensate, the volume of the steam will decrease, as a result of which the bottom layer of the volume of the steam moves upwards in the direction of line I.

When a new blow-off steam charge is supplied to the vessel 6, the supplied new charge will displace the remaining steam from the previous charge in the direction of the discharge 10. The bottom layer will then move down by height H, from line I in the direction of line II. The newly supplied charge again comes into contact with the heat exchanger 9, as a result of which the exchange of heat with the steam can take place again. In this way, continuous heat exchange with discretely supplied blow-off steam becomes possible.

The condensate of the steam, water, will collect at the lower side of the vessel 6. The conically shaped bottom 30 of the vessel 6 will cause the water to flow in the direction of the opening 31 and to be collected in a receptacle 33. The water of condensation 32 collected here can then be used further for heat recovery. Also, solid particles which have been carried along in the charge can be discharged via the opening 31.

Preferably, the device is dimensioned such that the boundary layer II is moved up by a height H. In this case, the device 1 may be dimensioned such that the boundary layer I is always situated below the heat exchanger. As a result thereof, steam is always in contact with the heat exchanger. Preferably, a new steam charge is introduced when the boundary layer II reaches the lower side of the heat exchanger, or just before that point in time.

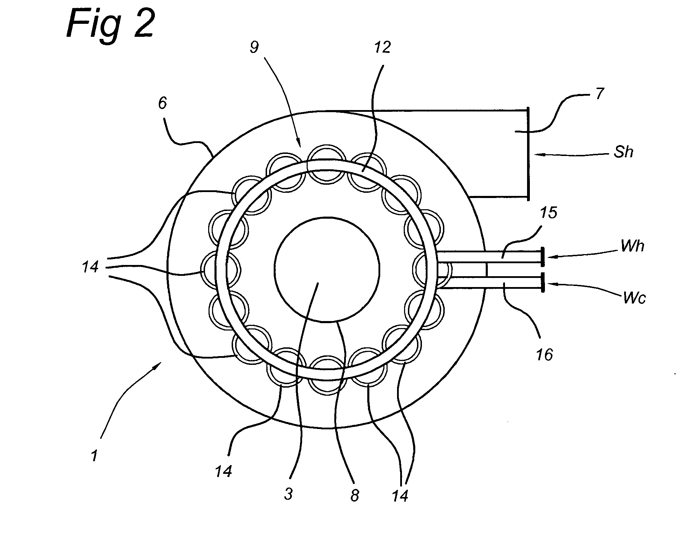

Fig. 2 shows a top view of the device 1 shown in Fig. 1. Identical parts have been given the same reference numerals in this figure which shows the vessel 6 with an internal volume. In the internal volume, the tube 8 is provided with a duct 3. The heat exchanger 9 is placed around the tube 8. The heat exchanger 9 comprises a supply line 16 and a discharge line 15 for liquid. The heat exchanger 9 is also provided with heating spirals 14. The spirals are placed at a distance from the wall of the vessel 6 and along a circumference provided in the vessel 6. The inlet 7 is provided in a side wall of the vessel 6. In the illustrated embodiment, the inlet 7 is provided tangentially in the container. This ensures that rotation is imparted to the steam when it is introduced. This rotation ensures that the steam can be brought into intimate contact with the heating spirals 14.

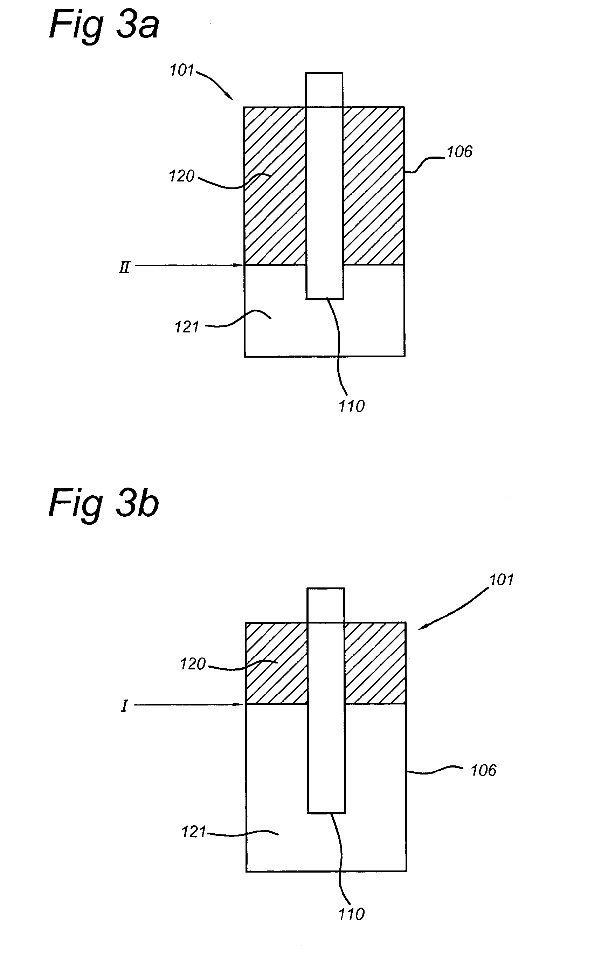

The general principle of the invention is explained with reference to Figs. 3a and 3b. Fig. 3a shows a device 101 with a container 106 just after a blow-off steam charge has been supplied. The blow-off steam charge is situated in the container 106 and takes up part of the internal volume (indicated by number 120). In the container 106, a boundary of a steam/air layer II is present. Above the boundary of the steam/air layer II, steam is present, and below the boundary, there is air. In this case, the steam level reaches just above the discharge 110. Since steam tends to move upwards, the steam will not be able to leave the container 106 via the discharge 110. In this case, the air which is present near the discharge 110, which is relatively heavy and therefore does not tend to move upwards, also forms a barrier for the steam layer to leave the device 101 via the outlet 110. The heat of the steam and the condensation energy are absorbed by means of a heat exchanger which is not illustrated and is provided in a top part of the container 106. It will be clear to the person skilled in the art that this may be effected in many ways. Due to the condensed portion, the volume of the steam will significantly decrease. Consequently, for example, air may be drawn in, for example via the outlet 10.

This results in the steam/air layer moving upwards, in the direction of the heat exchanger. The situation just before a blow-off steam charge is introduced is illustrated in Fig. 3b. This shows that the volume of steam (denoted by reference numeral 120) is reduced. Consequently, the volume of air (indicated by reference numeral 121) has increased. Preferably, the device 101 is designed and dimensioned such that, just before a new steam charge is supplied, the steam/air layer I is situated just below the heat exchanger, so that the heat exchanger is substantially in contact with the volume of steam 120. As a result thereof, it is possible to exchange heat in a relatively continuous manner using intermittently and instantaneously supplied blow-off steam charges.

To the person skilled in the art, it will be clear that Fig. 3a and Fig. 3b show a diagrammatic view of the processes of the method and in the device according to the invention. These figures are therefore not intended to be interpreted as limiting, but only serve to explain the present invention. Thus, in practice, it is for example possible for the transition between the steam layer and air layer present in the container to be gradual. Nevertheless, it will be possible to indicate where there is a boundary between steam and air, and in such a case, it will be possible to use the insights of the present invention.

It will be clear to the person skilled in the art that the present invention is not limited to that which has been described here, and that several equivalent embodiments of the invention are possible.

## Claims

1. Method for recovering heat from intermittently and instantaneously released blow-off steam charges, wherein the method is carried out using a container (6) with an internal volume (2), provided with an inlet (7) and an outlet (10), wherein the method comprises the following steps:
- supplying to the container via the inlet (7) and collecting in the internal volume (2) of the container (6) a blow-off steam charge (Sₕ), wherein the charge is held in a gravitational field;
- recovering energy from a portion of the blow-off steam charge (Sₕ) by condensation thereof, wherein condensation results in a stream from said portion to an outlet which is at a lower gravitational potential;
- discharging a portion of the charge from the internal volume (2) of the container via the outlet (10) at a lower gravitational potential by supplying a subsequent blow-off steam charge (Sₕ) to the internal volume (2) and thus expelling the charge which is present via the outlet; **characterized in**
- drawing in air via the outlet during heat recovery.

2. Method according to Claim 1, wherein the volume of the supplied blow-off steam charge (Sₕ) is smaller than the volume of the container which is at a higher gravitational potential than the outlet.

3. Method according to Claim 2, wherein the volume of the supplied blow-off steam charge (Sₕ) is between 70% and 90% of the internal volume (2) of the container.

4. Method according to one of the preceding claims, wherein the step of exchanging heat from the blow-off steam charge at least partly coincides with the step of supplying the next blow-off steam charge.

5. Device (1) for recovering energy from intermittently and instantaneously released blow-off steam charges (Sₕ), comprising a container (6) with an internal volume (2), wherein the container (6) is provided with an inlet (7) for introducing blow-off steam (Sₕ) into the container, with an outlet (10) for discharging blow-off steam, and with a heat-exchange element (9) for recovering energy from the blow-off steam, wherein the heat-exchange element (9), in a position of use of the container (6), is placed at a vertical distance above the outlet (10), **characterized in that** the outlet is configured to be open during the recovery of energy from the blow-off steam in order to introduce air via the outlet during heat recovery.

6. Device according to Claim 5, wherein the heat-exchange element (9) comprises a heat exchanger (14) which is provided in the internal volume (2) of the container (6).

7. Device according to Claim 5 or 6, wherein the inlet (7) is placed near the heat-exchange element (9).

8. Device according to one of Claims 5-7, wherein the container (6) comprises an inlet for drawing in a gas, such as air.

9. Device according to Claim 8, wherein the inlet (10) and the outlet (10) are the same.

10. Device according to one of Claims 5-9, wherein the inlet (7) is provided in an upper part of the container (6).

11. Device according to one of Claims 5-10, wherein the inlet is provided tangentially to a wall of the container (6).

12. Device according to one of Claims 5-11, wherein the container (6) is provided with a tube (8) having a first (10) and a second nozzle orifice (5), wherein the first nozzle orifice (10) is provided in the internal volume (2) of the container, and wherein the second nozzle orifice (5) is placed at a vertical distance above the first nozzle orifice (10) and outside the internal volume (2) of the container (6), and wherein the outlet (10) comprises the first nozzle orifice (10).

13. Device according to one of Claims 5-12, wherein the outlet (10) is placed at a vertical distance from a bottom (30) of the container.

14. Device according to one of Claims 5-13, wherein the inlet (7) is provided with an air-distributing element in order that the blow-off steam flows evenly into the container (6).

15. Assembly comprising a steam-peeling device and a device according to one of Claims 5-14 connected to the steam-peeling device.

## Patentansprüche

1. Verfahren zum Wärmerückgewinnen aus intermittierend und unmittelbar freigelassenen Ausblasdampfladungen, wobei das Verfahren unter Verwendung eines Behälters (6) mit einem Innenvolumen (2) durchgeführt wird, der mit einem Einlass (7) und einem Auslass (10) versehen ist, wobei das Verfahren die folgenden Schritte umfasst:
- Zuführen zu dem Behälter über den Einlass (7) und Sammeln in dem Innenvolumen (2) des Behälters (6) einer Ausblasdampfladung (Sₕ), wobei die Ladung in einem Gravitationsfeld gehalten wird;
- Energierückgewinnen aus einem Teil der Ausblasdampfladung (Sₕ) durch deren Kondensation, wobei eine Kondensation zu einem Fluss von dem Teil zu einem Auslass führt, welcher auf einem niedrigeren Gravitationspotential liegt;
- Ablassen eines Teils der Ladung aus dem Innenvolumen (2) des Behälters über den Auslass (10) auf einem niedrigerem Gravitationspotential durch Zuführen einer nachfolgenden Ausblasdampfladung (Sₕ) in das Innenvolumen (2) und dadurch Ausstoßen der Ladung, welche vorhanden ist, über den Auslass; **gekennzeichnet durch**
- Einsaugen von Luft über den Auslass während einer Wärmerückgewinnung.

2. Verfahren nach Anspruch 1, wobei das Volumen der zugeführten Ausblasdampfladung (Sₕ) kleiner ist als das Volumen des Behälters, der auf einem höheren Gravitationspotential als der Auslass liegt.

3. Verfahren nach Anspruch 2, wobei das Volumen der zugeführten Ausblasdampfladung (Sₕ) zwischen 70% und 90% des Innenvolumens (2) des Behälters beträgt.

4. Verfahren nach einem der vorangehenden Ansprüche, wobei der Schritt eines Wärmeaustauschens aus der Ausblasdampfladung zumindest teilweise mit dem Schritt eines Zuführens der nächsten Ausblasdampfladung zusammenfällt.

5. Vorrichtung (1) zu einem Energierückgewinnen aus intermittierend und unmittelbar freigelassenen Ausblasdampfladungen (Sₕ), die einen Behälter (6) mit einem Innenvolumen (2) umfasst, wobei der Behälter (6) mit einem Einlass (7) zu einem Einleiten eines Ausblasdampfes (Sₕ) in den Behälter, mit einem Auslass (10) zu einem Ablassen von Ausblasdampf, und mit einem Wärmetauschelement (9) zum Energierückgewinnen aus dem Ausblasdampf versehen ist, wobei das Wärmetauschelement (9), in einer Verwendungslage des Behälters (6), in einem vertikalen Abstand über dem Auslass (10) angeordnet ist, **gekennzeichnet dadurch dass**
der Auslass ausgebildet ist, um während der Energierückgewinnung aus dem Ausblasdampf geöffnet zu sein, um während einer Wärmerückgewinnung Luft durch den Auslass einzuleiten.

6. Vorrichtung nach Anspruch 5, wobei das Wärmetauschelement (9) einen Wärmetauscher (14) umfasst, welcher in dem Innenvolumen (2) des Behälters (6) bereitgestellt ist.

7. Vorrichtung nach Anspruch 5 oder 6, wobei der Einlass (7) nahe dem Wärmetauschelement (9) angeordnet ist.

8. Vorrichtung nach einem der Ansprüche 5 bis 7, wobei der Behälter (6) einen Einlass zum Einsaugen eines Gases wie Luft umfasst.

9. Vorrichtung nach Anspruch 8, wobei der Einlass (10) und der Auslass (10) der gleiche sind.

10. Vorrichtung nach einem der Ansprüche 5 bis 9, wobei der Einlass (7) in einem oberen Teil des Behälters (6) bereitgestellt ist.

11. Vorrichtung nach einem der Ansprüche 5 bis 10, wobei der Einlass tangential zu einer Wand des Behälters (6) bereitgestellt ist.

12. Vorrichtung nach einem der Ansprüche 5 bis 11, wobei der Behälter (6) mit einem Rohr (8) versehen ist, das eine erste (10) und eine zweite Düsenöffnung (5) aufweist, wobei die erste Düsenöffnung (10) im Innenvolumen (2) des Behälters bereitgestellt ist, und wobei die zweite Düsenöffnung (5) in einem vertikalen Abstand über der ersten Düsenöffnung (10) und außerhalb des Innenvolumens (2) des Behälters (6) angeordnet ist, und wobei der Auslass (10) die erste Düsenöffnung (10) umfasst.

13. Vorrichtung nach einem der Ansprüche 5 bis 12, wobei der Auslass (10) in einem vertikalen Abstand von einem Boden (30) des Behälters angeordnet ist.

14. Vorrichtung nach einem der Ansprüche 5 bis 13, wobei der Einlass (7) mit einem luftverteilenden Element versehen ist, damit der Ausblasdampf gleichmäßig in den Behälter (6) strömt.

15. Baugruppe umfassend eine Dampfschälvorrichtung und eine Vorrichtung nach einem der Ansprüche 5 bis 14, die mit der Dampfschälanordnung verbunden ist.

## Revendications

1. Procédé de récupération de chaleur de charges de vapeur d'échappement libérées de façon intermittente et instantanée, le procédé étant effectué en utilisant un récipient (6) ayant un volume interne (2), doté d'une entrée (7) et d'une sortie (10), le procédé comprenant les étapes suivantes :
- la fourniture au récipient via l'entrée (7) et la collecte dans le volume interne (2) du récipient (6) d'une charge de vapeur d'échappement (Sₕ), la charge étant maintenue dans un champ gravitationnel ;
- la récupération d'énergie d'une partie de la charge de vapeur d'échappement (Sₕ) par condensation de celle-ci, la condensation provoquant un flux de ladite partie vers une sortie qui est à un potentiel gravitationnel inférieur ;
- l'évacuation d'une partie de la charge du volume interne (2) du récipient via la sortie (10) à un potentiel gravitationnel inférieur en fournissant une ultérieure charge de vapeur d'échappement (Sₕ) au volume interne (2) et en expulsant ainsi la charge qui est présente via la sortie ;
**caractérisé par**
- l'entrée d'air via la sortie pendant la récupération de chaleur.

2. Procédé selon la revendication 1, dans lequel le volume de la charge de vapeur d'échappement (Sₕ) fournie est inférieur au volume du récipient qui est à un potentiel gravitationnel plus élevé que la sortie.

3. Procédé selon la revendication 2, dans lequel le volume de la charge de vapeur d'échappement (Sₕ) fournie est entre 70 % et 90 % du volume interne (2) du récipient.

4. Procédé selon l'une des revendications précédentes, dans lequel l'étape d'échange de chaleur de la charge de vapeur d'échappement coïncide au moins en partie avec l'étape de fourniture de la charge de vapeur d'échappement suivante.

5. Dispositif (1) pour récupérer de l'énergie de charges de vapeur d'échappement (Sₕ) libérées de façon intermittente et instantanée, comprenant un récipient (6) ayant un volume interne (2), dans lequel le récipient (6) est doté d'une entrée (7) pour l'introduction de vapeur d'échappement (Sₕ) dans le récipient, d'une sortie (10) pour l'évacuation de vapeur d'échappement et d'un élément d'échange de chaleur (9) pour la récupération d'énergie de la vapeur d'échappement, dans lequel l'élément d'échange de chaleur (9), dans une position d'utilisation du récipient (6), est placé à une distance verticale au-dessus de la sortie (10), **caractérisé en ce que** la sortie est configurée pour être ouverte pendant la récupération d'énergie en provenance de la vapeur d'échappement afin d'introduire de l'air via la sortie pendant la récupération de chaleur.

6. Dispositif selon la revendication 5, dans lequel l'élément d'échange de chaleur (9) comprend un échangeur de chaleur (14) qui est prévu dans le volume interne (2) du récipient (6).

7. Dispositif selon la revendication 5 ou 6, dans lequel l'entrée (7) est placée près de l'élément d'échange de chaleur (9).

8. Dispositif selon l'une des revendications 5 à 7, dans lequel le récipient (6) comprend une entrée pour faire entrer un gaz, tel que de l'air.

9. Dispositif selon la revendication 8, dans lequel l'entrée (10) et la sortie (10) sont identiques.

10. Dispositif selon l'une des revendications 5 à 9, dans lequel l'entrée (7) est prévue dans une partie supérieure du récipient (6).

11. Dispositif selon l'une des revendications 5 à 10, dans lequel l'entrée est prévue de façon tangentielle par rapport à une paroi du récipient (6).

12. Dispositif selon l'une des revendications 5 à 11, dans lequel le récipient (6) est doté d'un tube (8) ayant un premier (10) et un second (5) orifice formant buse, dans lequel le premier orifice formant buse (10) est prévu dans le volume interne (2) du récipient, et dans lequel le second orifice formant buse (5) est placé à une distance verticale au-dessus du premier orifice formant buse (10) et à l'extérieur du volume interne (2) du récipient (6), et dans lequel la sortie (10) comprend le premier orifice formant buse (10).

13. Dispositif selon l'une des revendications 5 à 12, dans lequel l'orifice de sortie (10) est placé à une distance verticale d'un fond (30) du récipient.

14. Dispositif selon l'une des revendications 5 à 13, dans lequel l'orifice d'entrée (7) est doté d'un élément de distribution d'air afin que la vapeur d'échappement s'écoule de façon régulière dans le récipient (6).

15. Ensemble comprenant un dispositif d'épluchage à la vapeur et un dispositif selon l'une des revendications 5 à 14 raccordé au dispositif d'épluchage à la vapeur.
